# FASCICULE DE BREVET EUROPEEN

(11) **EP 0 559 555 B1**
(45) Date de publication et mention de la délivrance du brevet: **23.04.1997**
(21) Numéro de dépôt: 93400537.2
(22) Date de dépôt: 02.03.1993
(51) Int. Cl.: H02J 7/24

(54) **Circuit d'alternateur à antiparasitage amélioré, notamment pour véhicules automobiles**
Verbesserter störungsunterdrückender Wechselstromgenerator, insbesondere für Kraftfahrzeuge
Improved noise suppressed alternator circuit, especially for vehicles

(30) Priorité: 03.03.1992 FR 9202526
(43) Date de publication de la demande: 08.09.1993
(73) Titulaire: VALEO EQUIPEMENTS ELECTRIQUES MOTEUR, 94000 Créteil (FR)
(72) Inventeur: Pierret, Jean-Marie, F-75012 Paris (FR); Sisavath, Georges, F-77400 St Thibault des Vignes (FR)
(74) Mandataire: Martin, Jean-Jacques

(56) Documents cités:
- EP-A- 0 430 203
- DE-U- 8 710 737

## Description

La présente invention a trait d'une façon générale aux circuits d'alternateurs notamment dans les véhicules automobiles.

Un circuit d'alternateur classique, tel qu'il est défini dans le préambule de la revendication 1, peut être illustré par exemple par la figure 1 du document EP-A-0 430 203.

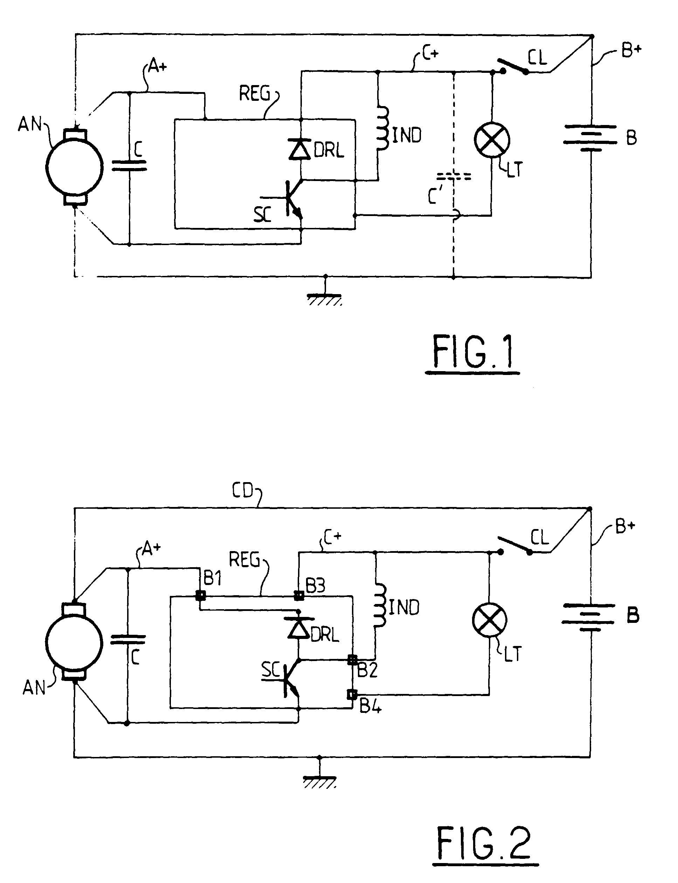

On a représenté sur la figure 1 annexée un tel circuit connu, complété par un condensateur d'antiparasitage.

Ainsi la référence AN y désigne l'alternateur, incorporant classiquement un pont redresseur (non illustré), C le condensateur d'antiparasitage branché entre les bornes de sortie de AN, REG un circuit électronique de régulation de la tension délivrée par l'alternateur, B la batterie du véhicule, CL la clé de contact et IND l'enroulement d'excitation de l'alternateur. Le courant dans l'enroulement IND est commandé par un composant semi-conducteur de puissance SC contenu dans le circuit REG. Une diode de roue libre est désignée par DRL. LT désigne une lampe témoin de défaut de fonctionnement.

L'enroulement IND et la diode de roue libre DRL sont branchées en parallèle entre la borne de sortie du semi-conducteur SC et la tension dite C+ présente sur la borne de la clé de contact opposée à sa borne reliée à la tension de batterie, notée B+.

Dans un tel circuit classique, le courant d'excitation dans l'enroulement IND, du fait de la valeur selfique de ce dernier, ne présente pas de variations brusques. En revanche, la partie de ce courant d'excitation effectivement consommée sur le réseau de bord du véhicule se trouve fortement hachée, la diode de roue libre permettant la persistance de ce courant dans IND pendant les phases où le semi-conducteur SC est bloqué.

Ce caractère fortement haché du courant consommé sur le réseau pour produire le courant d'excitation provoque, notamment du fait de la longueur importante des câbles électriques reliant le pôle positif de la batterie à la borne haute de l'inducteur IND via la clé de contact CL, des perturbations à haute fréquence tout à fait indésirables.

Une solution qui peut être facilement envisagée pour résoudre ce problème consiste à placer un autre condensateur d'antiparasitage entre la tension C+ et la masse. Cet autre condensateur est indiqué en traits tiretés sur la figure 1 et désigné par la référence C'.

Cette solution, outre qu'elle augmente le coût de revient du circuit d'alternateur, présente un inconvénient majeur, en cas de rupture de la liaison entre la borne positive de sortie de l'alternateur et le pôle positif de la batterie (phénomène appelé classiquement "load-dump"), en ce qu'elle favorise la destruction des diodes du pont redresseur.

Plus précisément, lorsqu'une telle rupture se produit, il apparaît à la sortie de l'alternateur une forte surtension. Et lorsque le pont redresseur est constitué par des diodes écrêteuses, celles-ci, en absorbant l'énergie de la surtension, peuvent être détruites si cette surtension présente une durée excessive, c'est-à-dire si le courant d'excitation n'est pas rapidement abaissé. La présence du second condensateur C', qui contribue au contraire à ralentir la décroissance du courant d'excitation, est donc tout à fait indésirable.

On notera pour terminer que, par construction, la borne haute de l'enroulement d'excitation IND est toujours reliée, à l'intérieur de l'alternateur, à la borne d'entrée pour la tension C+ de celui-ci. Il n'est donc pas question d'amener l'enroulement IND et le semi-conducteur associé SC en parallèle avec le condensateur d'antiparasitage C branché entre les bornes de sortie de l'alternateur pour éviter d'avoir recours au second condensateur d'antiparasitage C' tel que décrit plus haut.

La présente invention vise à pallier ces inconvénients de l'état de la technique et à proposer un nouveau circuit d'alternateur qui en particulier:
- permette d'assurer un antiparasitage satisfaisant à l'aide d'un seul condensateur;
- soit compatible avec la construction classique des alternateurs, dans laquelle l'une des bornes de l'enroulement d'excitation est reliée de façon interne à la borne d'entrée de l'alternateur pour la tension C+; et
- permette de diminuer sensiblement la durée de la surtension qui apparaît lors d'une rupture de la liaison alternateur/batterie.

La présente invention propose à cet effet un circuit d'alternateur tel que défini dans la revendication 1.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la figure 1, déjà décrite, illustre un circuit d'alternateur connu en soi, et
- la figure 2 montre le circuit d'alternateur selon la présente invention.

En référence maintenant à la figure 2, on a représenté un circuit qui comprend un alternateur AN dont un pont redresseur (non représenté et classique en soi) comporte une première borne de sortie reliée au pôle positif de la batterie B par un conducteur CD du véhicule, et une deuxième borne de sortie reliée à la masse. La borne négative de la batterie B est également reliée à la masse. La tension positive délivrée par l'alternateur est notée A+. La tension aux bornes de la batterie est notée B+.

Entre les deux bornes de sortie du pont redresseur de l'alternateur est prévu un condensateur d'antiparasitage C.

Un circuit régulateur REG destiné à commander l'excitation de l'alternateur de manière à avoir à sa sortie une tension égale à une tension de consigne comprend une première borne B1 reliée à la borne de sortie positive de AN, afin de comparer cette tension à une ou plusieurs tensions de seuil et effectuer la commande du courant d'excitation. Cette commande s'effectue par un transistor de puissance SC ou analogue, par exemple un transistor bipolaire NPN dont l'émetteur est reliée à la masse de l'alternateur et dont le collecteur est reliée à une borne B2 de connexion avec une première extrémité d'un enroulement d'excitation IND de l'alternateur AN.

La seconde extrémité de l'enroulement IND est reliée à la borne positive de la batterie par l'intermédiaire d'un interrupteur CL constitué par la clé de contact du véhicule. La tension à la seconde borne de IND est notée C+, et elle est également appliquée à une borne B3 du circuit REG afin de permettre la mise en service et hors service de ce dernier.

Enfin une lampe témoin de défaut LT est montée entre l'interrupteur CL (côté tension C+) et une borne B4 du circuit régulateur REG.

Selon l'aspect essentiel de l'invention, une diode de roue libre DRL est montée entre le collecteur de SC et la ligne de tension A+ sur la première borne de sortie de l'alternateur. Concrètement, cette liaison est représentée sur la figure 2 par le fait que la cathode de DRL est reliée, de façon interne au circuit REG, à la borne B1 qui reçoit la tension A+.

Ainsi, lorsque l'interrupteur CL est fermé, c'est-à-dire que le circuit est en service, la diode DRL se retrouve bien en parallèle avec l'enroulement IND, pour remplir sa fonction de roue libre.

Cela étant, du fait de la connexion particulière de la diode DRL, on évite le découpage du courant d'excitation dans le câble de grande longueur qui relie l'extrémité haute de l'inducteur au pôle positif de la batterie via CL. Et ce découpage est reporté sur la liaison entre la ligne de tension A+ et la diode de roue libre DRL. Cette liaison a pour double caractéristique d'être courte (généralement quelques centimètres), du fait que le circuit REG est toujours placé à proximité de l'alternateur AN, et d'aboutir au condensateur d'antiparasitage C du pont redresseur de l'alternateur. Il en résulte d'une part que les parasites à haute fréquence susceptibles d'être produits par le caractère selfique de la liaison précitée sont faibles, et d'autre part que ces parasites sont filtrés par la capacité C, qui joue donc le double rôle d'un antiparasitage du pont redresseur de l'alternateur et d'un antiparasitage du circuit régulateur.

On va maintenant décrire le comportement du circuit de la présente invention lors d'une rupture accidentelle du conducteur CD lorsque le circuit est en fonctionnement, en comparaison avec le comportement du circuit de l'art antérieur représenté sur la figure 1 dans la même situation.

Lorsqu'une telle rupture se produit, une surtension de forte énergie est appliquée par l'alternateur aux diodes du pont redresseur qui lui est associé. Dans le cas classique où les diodes de ce pont sont des diodes écrêteuses, ce sont elles qui vont absorber cette énergie, ce qui peut conduire à leur destruction pure et simple.

Et le risque d'une telle destruction s'avère étroitement lié à la durée de la surtension précitée.

Dans le circuit de l'art antérieur représenté sur la figure 1, après la rupture de la liaison alternateur/batterie, le transistor SC est bloqué et l'enroulement IND se retrouve rebouclé sur lui-même à travers la diode DRL. Le courant d'excitation dans IND va donc décroître très lentement, de même que la surtension produite, et les diodes écrêteuses présentent un fort risque de destruction.

Au contraire, dans le circuit de la figure 2, l'enroulement IND se trouve branchée en série avec la diode DRL entre la tension B+ et la surtension A+. On comprend que, dans cette situation, le courant d'excitation diminue beaucoup plus rapidement du fait en particulier de la différence de potentiel négative existant entre l'extrémité haute et l'extrémité basse de l'enroulement, qui peut atteindre 10 volts ou davantage.

Et des calculs ont permis de démontrer qu'avec le circuit de la présente invention, la durée de la surtension produite était considérablement réduite et de l'ordre du tiers de la durée obtenue avec le circuit de l'art antérieur.

Le circuit de la présente invention présente donc également l'avantage d'offrir un certain degré de protection des diodes écrêteuses du pont redresseur de l'alternateur lors d'une rupture de la liaison électrique alternateur/batterie.

Bien entendu, la présente invention n'est nullement limitée à la forme de réalisation décrite ci-dessus et représentée sur les dessins, mais l'homme de l'art saura y apporter toute variante ou modification conforme à l'objet défini par les revendications.

## Revendications

1. Circuit d'alternateur, notamment pour véhicule automobile, du type comprenant :
- un alternateur (AN) comportant un pont redresseur de sortie et un enroulement d'excitation (IND),
- des moyens interrupteurs commandés (SC) reliés à une première borne (B2) de l'enroulement d'excitation (IND) pour la commande du courant d'excitation de l'alternateur à des fins de régulation,
- une diode de roue libre (DRL) destinée à être branchée en parallèle avec l'enroulement d'excitation et prévue à proximité de l'alternateur,
l'alternateur étant relié à une batterie (B), et un premier pôle de la batterie étant relié à une seconde borne de l'enroulement d'excitation par l'intermédiaire d'un interrupteur de contact (CL) et d'une liaison électrique de grande longueur,
caractérisé en ce qu'il comprend en outre un condensateur d'antiparasitage (C) branché entre les bornes de sortie de l'alternateur,
et en ce que la diode de roue libre (DRL) est prévue entre la première borne (B2) de l'enroulement d'excitation (IND) et, via une courte liaison électrique, une borne de sortie de l'alternateur (AN) de même polarité que ledit premier pôle de la batterie, de telle sorte que, lorsque ledit interrupteur de contact (CL) est fermé, la diode de roue libre se trouve branchée en parallèle avec l'enroulement d'excitation et on évite le découpage du courant d'excitation dans ladite liaison électrique de grande longueur.

2. Circuit selon la revendication 1, caractérisé en ce que ladite même polarité est la polarité positive.

## Patentansprüche

1. Wechselstromgeneratorschaltung, insbesondere für Kraftfahrzeuge, bestehend aus:
- einem Wechselstromgenerator (AN) mit einer ausgangsseitigen Gleichrichterbrücke und einer Erregerwicklung (IND),
- angesteuerten Schaltermitteln (SC), die mit einer ersten Klemme (B2) der Erregerwicklung (IND) für die Steuerung des Erregerstroms des Wechselstromgenerators zu Regelungszwecken verbunden sind,
- einer Freilaufdiode (DLR), die mit der Erregerwicklung parallelgeschaltet wird und in der Nähe des Wechselstromgenerators vorgesehen ist,
wobei der Wechselstromgenerator mit einer Batterie (B) verbunden ist und ein erster Pol der Batterie über einen Kontaktschalter (CL) und eine lange elektrische Verbindungsleitung mit einer zweiten Klemme der Erregerwicklung verbunden ist,
**dadurch gekennzeichnet**, daß sie außerdem einen Entstörkondensator (C) umfaßt, der zwischen den Ausgangsklemmen des Wechselstromgenerators geschaltet ist,
und daß die Freilaufdiode (DRL) zwischen der ersten Klemme (B2) der Erregerwicklung (IND) und, über eine kurze elektrische Verbindungsleitung, einer Ausgangsklemme des Wechselstromgenerators (AN) mit gleicher Polung wie der erste Pol der Batterie vorgesehen ist, so daß die Freilaufdiode, wenn der besagte Kontaktschalter (CL) geschlossen ist, mit der Erregerwicklung parallelgeschaltet ist und das Zerhacken des Erregerstroms in der besagten langen elektrischen Verbindungsleitung verhindert wird.

2. Schaltung nach Anspruch 1 , **dadurch gekennzeichnet**, daß die es sich bei der Polung um die Pluspolung handelt.

## Claims

1. Alternator circuit, in particular for a motor vehicule, of the type comprising :
- an alternator (AN) having an output rectifier bridge and a field coil (IND),
- controlled switching means (SC) connected to a first terminal (B2) of the field coil (IND) for controlling the excitation current of the alternator for regulation purposes.
- a freewheeling diode (DRL) designed to be connected in parallel with the field coil and provided in proximity to the alternator,
the alternator being connected to a battery (B), and a first pole of the battery being connected to a second terminal of the field coil by means of a contact switch (CL) and an electrical connection of long length,
characterised in that it also comprises a surge suppression capacitor (C) connected between the output terminals of the alternator,
and in that the freewheeling diode (DRL) is provided between the first terminal (B2) of the field coil (IND) and, via a short electrical connection, an output terminal of the alternator (AN) of the same polarity as the said first pole of the battery, so that, when the said contact switch (CL) is closed, the freewheeling diode is connected in parallel with the field coil and the hatching of the excitation current in the said electrical connection of long length is prevented.

2. Circuit according to Claim 1, characterised in that the said same polarity is positive polarity.
